# EUROPEAN PATENT APPLICATION

(11) **EP 1 535 814 A1**
(43) Date of publication of application: **01.06.2005**
(21) Application number: 04256424.5
(22) Date of filing: 19.10.2004
(51) Int. Cl.: B60T 8/40, F04B 53/12

(54) **Pump of electronic brake system**

(30) Priority: 25.11.2003 KR 2003083848
(71) Applicant: Mando Corporation, Pyungtaek-si, Kyongki-do (KR)
(72) Inventor: Yang, I-Jin, Pyungtaek-City Kyungki-Do (KR)
(74) Representative: Pratt, David Martin

(57) **Abstract**

A pump of an electronic brake system, in which an inlet valve (60) has an improved structure so that the inlet valve (60) is efficiently and stably opened. The inlet valve (60) includes a valve seat (70) formed at the end of a piston (15), a switch member (80) mounted on the valve seat (70), an elastic member (61) for applying elastic force for pushing the switch member (80) toward the valve seat (70), and a retainer (62) for receiving the switch member (80) and the elastic member (61), and a seat contact portion (81,81a) of the switch member (80) contacting the valve seat (70) has a planar surface. A protrusion (84) extended toward the valve seat (70) may be formed along the edge of the seat contact portion (81a) so that the seat contact portion linearly contacts the valve seat (70). The switch member (80) may be made of plastic. The valve seat (70) having a disk shape, which the seat contact portion (81,81a) contacts, may be formed integrally with the piston (15).

## Description

### CROSS-REFERENCE TO RELATED APPLICATION

This application claims the benefit of Korean Patent Application No. 2003-83848, filed November 25, 2003, in the Korean Intellectual Property Office, the disclosure of which is incorporated herein by reference.

### BACKGROUND OF THE INVENTION

### 1. Field of the Invention

The present invention relates to an electronic brake system, and more particularly to a pump of an electronic brake system for inhaling oil of low-pressure accumulators or a master cylinder and forcibly pumping the oil to a high-pressure accumulator.

### 2. Description of the Related Art

Generally, an electronic brake system serves to efficiently prevent wheel slippage of a vehicle generated due to the braking, rapid starting, or rapid accelerating of the vehicle, and comprises a plurality of solenoid valves for controlling brake oil transmitted to hydraulic brakes installed on wheels of the vehicle, low-pressure accumulators and a high-pressure accumulator for temporarily storing the oil taken out of the hydraulic brakes, a pair of pumps driven by a motor placed between the low-pressure accumulators and the high-pressure accumulator, and an ECU for controlling the driving of the solenoid valves and the motor. These components are installed in a compact modulate block made of aluminum.

The pumps serve to forcibly pump the oil of the low-pressure accumulators or the master cylinder into the high-pressure accumulator, thereby transmitting the oil to the hydraulic brakes or the master cylinder.

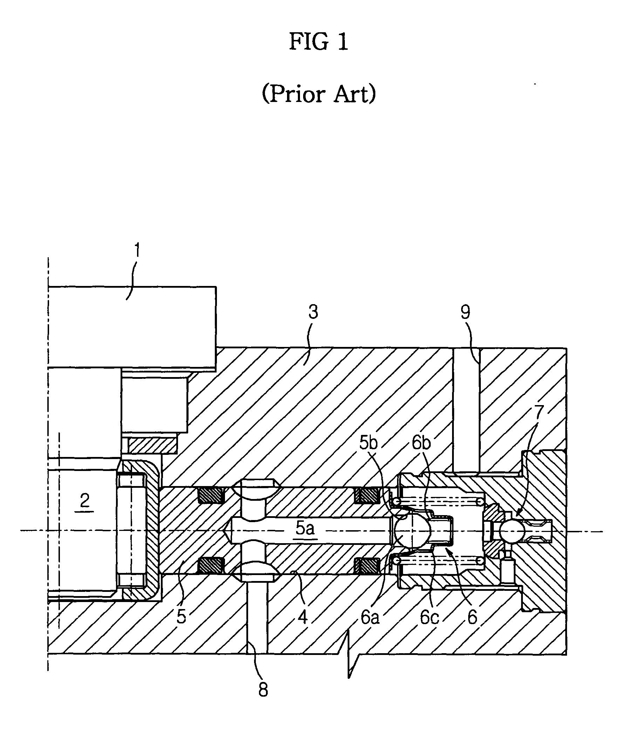

FIG. 1 is a cross-sectional view of a conventional pump applied to an electronic brake system.

With reference to FIG. 1, the conventional pump comprises a piston 5, including a suction passage 5a, installed in a bore 4 formed through a modulate block 3 so that the piston 5 reciprocates by means of an eccentric spindle 2 of a motor 1, an inlet valve 6 for opening and closing an outlet of the suction passage 5a according to the position of the piston 5, and an outlet valve 7 installed at an opened end of the bore 4 and operated conversely to the operation of the inlet valve 6.

A suction port 8, for connecting an inlet of the suction passage 5a formed in the piston 5 to low-pressure accumulators (not shown) or a master cylinder (not shown), and a discharge port 9, for connecting an outlet of the outlet valve 7 to an inlet of a high-pressure accumulator (not shown), are formed in the modulate block 3 such that the suction port 8 and the discharge port 9 communicate with the bore 4.

The inlet valve 6 for opening and closing the suction passage 5a includes a ball member 6a, having a ball shape, placed at the outlet of the suction passage 5a and made of metal, a spring 6b for elastically supporting the ball member 6a so that the ball member 6a contacts the outlet of the suction passage 5a, and a retainer 6c for receiving the ball member 6a and the spring 6b. A valve sheet 5b for causing the ball member 6a to be attached to or detached from the piston 5 is formed on the end of the piston 5 forming the outlet of the suction passage 5a.

In the above-described conventional pump, the inlet valve 6 and the outlet valve 7 are alternately opened and closed based on the variation of pressure in the bore 4 generated from the rectilinear reciprocation of the piston 5 due to the rotation of the eccentric spindle 2 of the motor 1, thereby pressurizing oil and pumping the oil into the high-pressure accumulator.

That is, when the piston 5 moves toward the outlet valve 7, the oil filling a gap between the piston 5 and the outlet valve 7 has an increased pressure, and the inlet valve 6 is closed and the outlet valve 7 is opened, thereby pumping the oil into the high-pressure accumulator through the discharge port 9.

On the other hand, when the piston 5 moves toward the eccentric spindle 2, a low pressure is formed in the gap between the piston 5 and the outlet valve 7, and the inlet valve 6 is opened and the outlet valve 7 is closed, thereby causing oil of the low-pressure accumulators or the master cylinder to fill the gap between the piston 5 and the outlet valve 7 through the suction port 8 and the suction passage 5a.

Since the valve sheet 5b, on which the ball member 6a of the inlet valve 6 is mounted, has a bell shape, the above conventional pump of the electronic brake system is disadvantageous in that it is difficult to manufacture the piston 5.

Since the ball member 6a has a ball shape, the above conventional pump of the electronic brake system is disadvantageous in that it is not easy to separate the ball member 6a from the valve sheet 5b.

Since the ball member 6a of the inlet valve 6 and the valve sheet 5b of the piston 5 are made of metal, residual magnetic force occurs between the valve sheet 5b and the ball member 6a when the inlet valve 6 is opened, thereby causing a difficulty in separating the ball member 6a from the valve sheet 5b.

The difficulty in separating the ball member 6a from the valve sheet 5b causes the inlet valve 6 not to be efficiently opened, and a sufficient quantity of oil cannot flow into the gap between the piston 5 and the outlet valve 7 when the inlet valve 6 is opened, thereby deteriorating the oil-discharging efficiency.

### SUMMARY OF THE INVENTION

Therefore, an aspect of the invention is to provide a pump of an electronic brake system, in which an inlet valve has an improved structure so that the inlet valve is efficiently opened.

In accordance with one aspect, the present invention provides a pump of an electronic brake system comprising: a motor installed in a bore formed in a modulate block; a piston installed in the bore, reciprocated by the motor, and provided with a suction passage; an outlet valve installed in the bore for forming a pressure chamber between the outlet valve and the piston; a retum spring placed in the pressure chamber for elastically supporting the piston; and an inlet valve placed at one end of the piston and operated conversely to the operation of the outlet valve for opening and closing the suction passage, wherein: the inlet valve includes a valve sheet formed at the end of the piston, a switch member mounted on the valve sheet, an elastic member for applying elastic force for pushing the switch member toward the valve sheet, and a retainer, receiving the switch member and the elastic member, elastically supported by the piston using the return spring; and a sheet contact portion of the switch member contacting the valve sheet has a planar surface.

A protrusion extended toward the valve sheet may be formed along the edge of the sheet contact portion so that the sheet contact portion linearly contacts the valve sheet.

An elastic member supporting portion of the switch member contacting the elastic member may have a planar surface.

The elastic member supporting portion may include a protrusion inserted into the elastic member.

Preferably, the switch member may be made of non-metal material.

More preferably, the switch member may be made of plastic.

The valve sheet having a disk shape, which the sheet contact portion contacts, may be formed integrally with the piston.

Preferably, the elastic member may be a coiled spring.

### BRIEF DESCRIPTION OF THE DRAWINGS

These and/or other aspects and advantages of the invention will become apparent and more readily appreciated from the following description of the embodiments, taken in conjunction with the accompanying drawings in which:
FIG. 1 is a cross-sectional view of a conventional pump of an electronic brake system;
FIG. 2 is a hydraulic circuit diagram of an electronic brake system, to which the present invention is applied;
FIG. 3 is a longitudinal-sectional view of a pump of an electronic brake system in accordance with the present invention;
FIG. 4 is an enlarged longitudinal-sectional view of FIG. 3 illustrating a pump of an electronic brake system in accordance with a first embodiment of the present invention; and
FIG. 5 is an enlarged longitudinal-sectional view of FIG. 3, illustrating a pump of an electronic brake system in accordance with a second embodiment of the present invention.

### DETAILED DESCRIPTION OF THE PREFERRED EMBODIMENTS

Reference will now be made in detail to the embodiment of the present invention, an example of which is illustrated in the accompanying drawings, wherein like reference numerals refer to like elements throughout. The embodiment is described below to explain the present invention by referring to the annexed drawings.

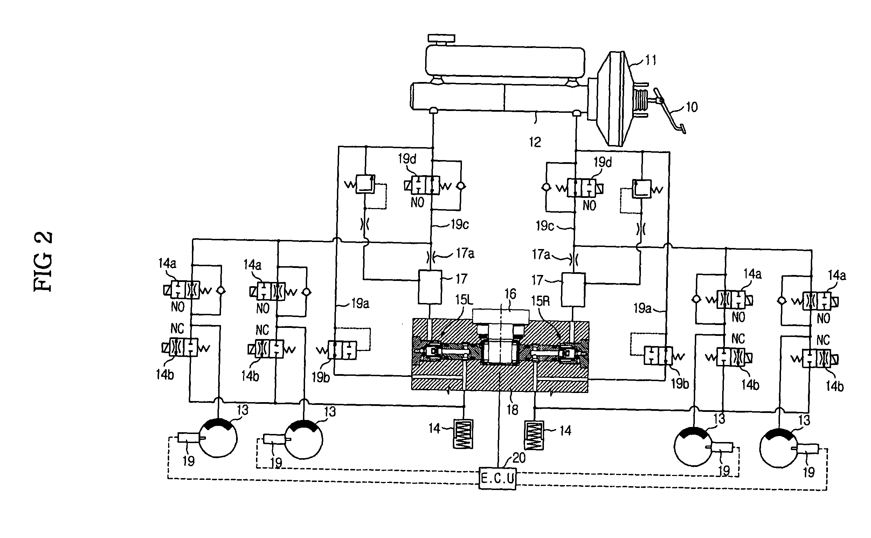

FIG. 2 is a hydraulic circuit diagram of an electronic brake system, to which the present invention is applied. As shown in FIG. 2, the electronic brake system, to which the present invention is applied, comprises a plurality of solenoid valves 14a and 14b for controlling brake oil transmitted from a servomechanism 11 and a master cylinder 12, connected to a brake pedal 10, to hydraulic brakes 13 installed on front wheels and rear wheels of a vehicle, a pair of low-pressure accumulators 14 for temporarily storing the oil taken out of the hydraulic brakes 13, a pair of pumps 15L and 15R for pumping the oil in the low-pressure accumulators 14 or the master cylinder 12, a motor 16 for simultaneously driving the pumps 15L and 15R, and a high-pressure accumulator 17 provided with an orifice 17a placed at an outlet thereof for reducing the pulsatory motion of the oil, which is pressurized and discharged by the driving of the pumps 15L and 15R. These components are installed in a modulate block 18 made of aluminum.

Each of the solenoid valves 14a is connected to an upper stream of the corresponding hydraulic brake 13, and is an NO (Normal Opened) type valve, which maintains its opened state during a normal operation. Each of the solenoid valves 14b is connected to a lower stream of the corresponding hydraulic brake 13, and is an NC (Normal Closed) type valve, which maintains its closed state during a normal operation. The opening and closing motion of the above solenoid valves 14a and 14b is controlled by an ECU 20, which senses the speed of the vehicle through wheel sensors 19 installed on the front and rear wheels of the vehicle.

Such an electronic brake system further comprises a bypass passage 19a for connecting a hydraulic line of an outlet of the master cylinder 12 and hydraulic lines of inlets of the pumps 15L and 15R. A reciprocating hydraulic valve 19b, which maintains its opened state during a normal operation and is closed when a driver presses on the brake pedal 10 so that braking pressure is transmitted to the reciprocating hydraulic valve 19b, is installed on the bypass passage 19a. The braking pressure generated when the driver presses on the brake pedal 10 is transmitted to the hydraulic brakes 13 of the front and rear wheels by the reciprocating hydraulic valve 19b.

A traction control valve 19d, which maintains its opened state during a normal operation and is closed when the front and rear wheels of the vehicle slip due to the rapid starting of the vehicle, so that the brake pressure generated from the driving of the pumps 15L and 15R is transmitted to the wheels, is installed on a hydraulic line 19c between the outlet of the master cylinder 12 and the outlet of the high-pressure accumulator 17, thereby allowing the vehicle to be braked under the condition that the driver does not press on the brake pedal 10.

A pair of the pumps 15L and 15R are driven at a designated phase difference by one motor 16, pressurize oil transmitted from the low-pressure accumulators 14 or the master cylinder 12, and pump the oil into the high-pressure accumulator 17.

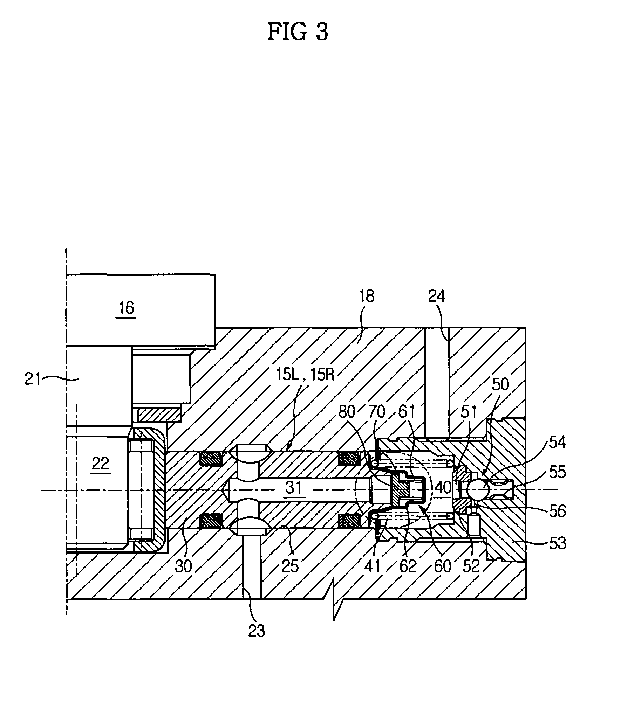

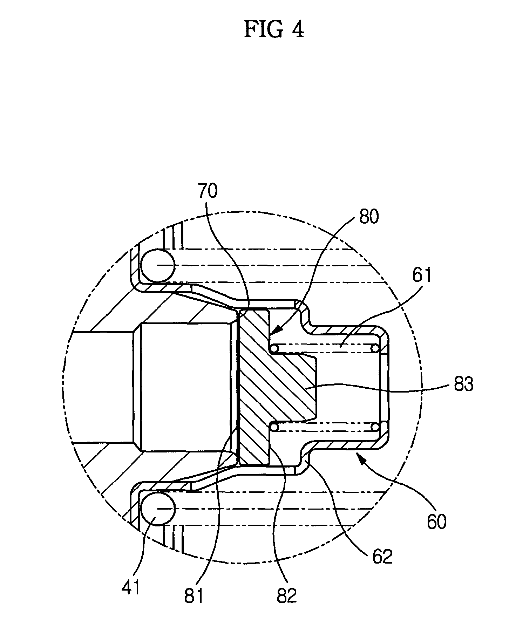

FIG. 3 is a longitudinal-sectional view of a pump of an electronic brake system in accordance with the present invention, and FIG. 4 is an enlarged longitudinal-sectional view of FIG. 3 illustrating a pump of an electronic brake system in accordance with a first embodiment of the present invention. For reference, a pair of the pumps 15L and 15R have symmetrical structures to each other centering on the motor 16, and thus the structure of only one pump 15R will be described in this embodiment.

As shown in FIG. 3, the motor 16, to which the spindle 12 is attached, for driving the pumps 15L and 15R is installed on the central portion of one surface of the modulate block 18. Since the front end of the spindle 21 serves as an eccentric shaft 22, and is positioned between the pistons 30 of the pumps 15L and 15R, the pumps 15L and 15R are driven at a phase difference of 180 degrees.

The pumps 15L and 15R are installed in a bore 25 formed in the modulate block 18 in a transverse direction. The bore 25 communicates with a suction port 23, which is connected to the low-pressure accumulators 14 and the reciprocating hydraulic valve 19b, and a discharge port 24, which is connected to the high-pressure accumulator 17.

The piston 30 is installed in the bore 25 such that the piston 30 contacts the eccentric shaft 22 of the spindle 21 and rectilinearly reciprocates, and an outlet valve 50 is installed at an opened end of the bore 25 so that a pressure chamber 40 is formed between the piston 30 and the outlet valve 50. The outlet valve 50 causes the pressure chamber 40 to communicate with the discharge port 24 or to be cut off from the communication with the discharge port 24.

An inlet valve 60 is installed at the end of the piston 30, and operated conversely to the operation of the outlet valve 50 based on the reciprocation of the piston 30, thereby opening and closing a suction passage 31 formed in the piston 30. The suction passage 31 communicates with the suction port 23, and oil flowing into the suction passage 31 through the suction port 23 is transmitted to the pressure chamber 40 by the opening of the inlet valve 60. A return spring 41 for elastically supporting the piston 30 to the eccentric shaft 22 is installed in the pressure chamber 40.

The outlet valve 50, which is operated conversely to the operation of the inlet valve 60 according to the position of the piston 30 and opens and closes a discharge passage 56, which will be described later, includes a sheet member 52 having an orifice 51 formed at the central portion thereof, and a valve cover 53 for covering the opened end of the bore 25.

A ball member 54, which is mounted in the orifice 51 of the sheet member 52, and an elastic member 55, which causes the ball member 54 to be elastically supported by the orifice 51, are installed in the valve cover 53, and the discharge passage 56 is formed in the valve cover 53 and transmits oil, flowed into the valve cover 53 through the orifice 51, to the discharge port 54.

The inlet valve 60 includes a valve sheet 70 formed integrally with the end of the piston 30, a switch member 80 mounted on the valve sheet 70, an elastic member 61 for elastically supporting the switch member 80 to the valve sheet 70, and a retainer 62 for receiving the switch member 80 and the elastic member 61 and elastically supporting the switch member 80 and the elastic member 61 to the piston 30 by means of the return spring 41.

The elastic member 61 may have any structure, which can elastically support the switch member 80. In this embodiment, the elastic member 61 is a coiled spring.

In the above pumps 15L and 15R of the present invention, when the piston 30 moves toward the outlet valve 50 and the pressure of oil transmitted to the pressure chamber 40 increases, the switch member 80 of the inlet valve 60 contacts the valve sheet 70 to close the suction passage 31, and the ball member 54 of the outlet valve 50 is separated from the orifice 51 by the hydraulic pressure in the pressure chamber 40 to open the discharge passage 56. Accordingly, the oil in the pressure chamber 40 is pumped into the high-pressure accumulator 17 through the discharge passage 56 and the discharge port 24.

On the other hand, when the piston 30 moves toward the eccentric shaft 22 and the hydraulic pressure in the pressure chamber 40 decreases, the switch member 80 is separated from the valve sheet 70 to open the suction passage 31, and the ball member 54 contacts the orifice 51 to close the discharge passage 56. Accordingly, the oil of the low-pressure accumulators 14 or the master cylinder 12 is supplied to the pressure chamber 40 through the suction port 23 and the suction passage 31, and fills the pressure chamber 40.

As shown in FIG 4, the valve sheet 70 having a disk shape is protruded integrally from the end of the piston 30, thus being easily manufactured, compared to the conventional valve sheet having a bell shape. Further, the valve sheet 70 has a reduced contact area with the switch member 80, thus allowing the switch member 80 to easily move.

The switch member 80 has an approximately disk shape so that a sheet contact portion 81 formed at one end of the switch member 80, which contacts or is separated from the valve sheet 70, has a planar surface. The planar surface of the sheet contact portion 81 causes oil flowing from the suction passage 31 to the pressure chamber 40, when the inlet valve 60 is opened, to be concentrated in the switch member 80, and increases form resistance, thereby allowing the switch member 80 to be easily separated from the valve sheet 70.

The end of the valve sheet 70 has the shape of a sharp protrusion so that the sheet contact portion 81 of the switch member 80 linearly contacts the valve sheet 70, thereby facilitating the opening operation of the switch member 80.

An elastic member supporting portion 82, having a planar surface for supporting the elastic member 61, is formed at the other end of the switch member 80 in opposite to the sheet contact portion 81. The elastic member supporting portion 82 having the planar surface simply and stably supports the elastic member 61, and is easily manufactured compared to an elastic member supporting portion having a curved surface.

A protrusion 83, which is inserted into the elastic member 61 to firmly support the elastic member 61 and stabilizes the movement of the switch member 80, is formed on the central area of the elastic member supporting portion 82.

The switch member 80 is made of non-metal material so that magnetic force is not generated between the switch member 80 and the valve sheet 70 formed integrally with the piston. Preferably, the switch member 80 is made of plastic by injection molding. Accordingly, the switch member 80 can be easily separated from the valve sheet 70.

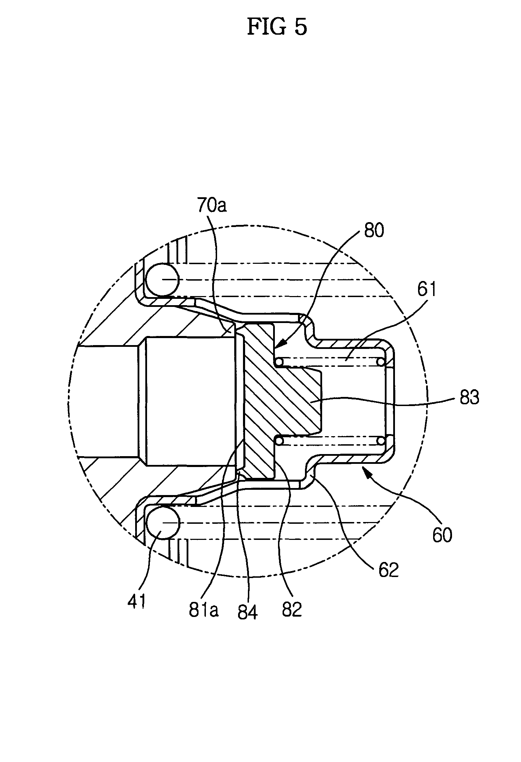

FIG. 5 is an enlarged longitudinal-sectional view of FIG. 3, illustrating a pump of an electronic brake system in accordance with a second embodiment of the present invention. As shown in FIG. 5, the end of a valve sheet 70a, which a sheet contact portion 81 a of the switch member 80 contacts, is processed to have a planar surface, and a sharpened protrusion 84 is formed along the edge of the sheet contact portion 81a of the switch member 80. Thereby, the switch member 80 linearly contacts the valve sheet 70.

Hereinafter, the operation of an electronic brake system having the above-described pumps 15L and 15R will be described in detail.

When a driver presses on the brake pedal 10, hydraulic braking pressure is generated from the master cylinder 12, and is supplied to the hydraulic brakes 13 of the wheels through the NO type solenoid valves 14a, thereby performing a brake operation.

Here, when an excessive quantity of the braking pressure is transmitted to the hydraulic brakes 13 of the wheels and the wheels slip on the road, the slippage of the wheels is detected by the wheel sensors 19, and is transmitted to the ECU 20. Then, the ECU 20 opens the NC type solenoid valves 14b so that the oil is taken out of the hydraulic brakes 13, thereby temporarily releasing the braking pressure and preventing the wheel slippage.

The oil, taken out of the hydraulic brakes 13 through the NC type solenoid valves 14b, is stored by the low-pressure accumulators 14, is pressurized by the driving of the pumps 15L and 15R, and is then transmitted to the high-pressure accumulator 17. The oil in the high-pressure accumulator 17 is supplied to the upper streams of the NO type solenoid valves 14a, thereby forming the braking pressure.

The above operation is repeatedly controlled by the ECU 20, and intermittently supplies the braking pressure to the hydraulic brakes 13, thereby stably achieving the braking of the vehicle.

When the slippage of the wheels generated due to the rapid starting of the vehicle regardless of the manipulation of the brake pedal 10 by the driver is detected by the wheel sensors 19, the traction control valve 19d and the NC type solenoid valves 14b are closed and the pumps 15L and 15R are operated by the control of the ECU 20, thereby supplying the braking pressure to the hydraulic brakes 13 through the NO type solenoid valves 14a and achieving the braking of the vehicle. Here, the oil is supplied from the outlet of the master cylinder 12 to the pumps 15L and 15R through the reciprocating hydraulic valve 19b, thereby generating hydraulic pressure.

When the braking operation is achieved, the oil in the low-pressure accumulators 14 or the master cylinder 12 is pressurized by the driving of the pumps 15L and 15R, and is supplied to the NO type solenoid valves 14a through the high-pressure accumulator 17 and the orifice 17a. Here, the operation of the pumps 15L and 15R of the present invention will be described as follows.

That it, the piston 30 in the bore 25 moves toward the outlet valve 50 by the rotation of the spindle 21 of the motor 16 so that the pressure of the oil in the pressure chamber 40 increases and the switch member 80 contacts the valve sheet 70, thereby causing the inlet valve 60 to close the suction passage 31.

When the pressure of the oil in the pressure chamber 40 increases, the ball member 54 is separated from the orifice 51, thereby causing the outlet valve 50 to open the discharge passage 56. Accordingly, the oil in the pressure chamber 40 is discharged to the high-pressure accumulator 17 through the discharge passage 56 and the discharge port 24.

On the other hand, when the piston 30 moves toward the motor 16 by the repulsive power of the return spring 41 and the pressure of the oil in the pressure chamber 40 decreases, the switch member 80 is separated from the valve sheet 70 by the pressure of the oil in the suction passage 31, thereby causing the inlet valve 60 to open the suction passage 31. Simultaneously, the ball member 54 contacts the orifice 51, thereby causing the outlet valve 50 to close the discharge passage 56. Accordingly, the oil in the low-pressure accumulators 14 is supplied to the pressure chamber 40 through the suction port 23 and the suction passage 31.

Here, the sheet contact portions 81 and 81a of the switch member 80 contacting the valve sheet 70, which have a planar surface, have a small area crossing with the suction passage 31, and cause the oil of the suction passage 31 to be concentrated in the sheet contact portions 81 and 81a, thereby allowing the switch member 80 to be easily separated from the valve sheet 70. Further, the switch member 80 is made of lightweight plastic so that the switch member 80 moves at a comparatively low hydraulic pressure, thereby being more easily separated from the valve sheet 70.

Accordingly, since the operation of the inlet valve 60 is efficiently performed by the above switch member 80, the filling rate of the oil transmitted to the pressure chamber 40 increases and the oil-discharging efficiency of the pumps 15L and 15R is improved.

As apparent from the above description, the present invention provides a pump of an electronic brake system, in which a switch member of an inlet valve has an improved structure such that the switch member is easily and rapidly separated from a valve sheet, thereby improving the filling rate of oil into a pressure chamber and an oil-discharging efficiency of the pump.

Although embodiments of the invention has been shown and described, it would be appreciated by those skilled in the art that changes may be made in these embodiments without departing from the principles and spirit of the invention, the scope of which is defined in the claims and their equivalents.

## Claims

1. A pump of an electronic brake system comprising:
a motor installed in a bore formed in a modulate block;
a piston installed in the bore, reciprocated by the motor, and provided with a suction passage;
an outlet valve installed in the bore for forming a pressure chamber between the outlet valve and the piston;
a return spring placed in the pressure chamber for elastically supporting the piston; and
an inlet valve placed at one end of the piston and operated conversely to the operation of the outlet valve for opening and closing the suction passage, wherein:
the inlet valve includes a valve sheet formed at the end of the piston, a switch member mounted on the valve sheet, an elastic member for applying elastic force for pushing the switch member toward the valve sheet, and a retainer, receiving the switch member and the elastic member, elastically supported by the piston using the return spring; and
a sheet contact portion of the switch member contacting the valve sheet has a planar surface.

2. The pump according to claim 1, wherein a protrusion extended toward the valve sheet is formed along the edge of the sheet contact portion so that the sheet contact portion linearly contacts the valve sheet.

3. The pump according to claim 1, wherein an elastic member supporting portion of the switch member contacting the elastic member has a planar surface.

4. The pump according to claim 3, wherein the elastic member supporting portion includes a protrusion inserted into the elastic member.

5. The pump according to claim 1, wherein the switch member is made of non-metal material.

6. The pump according to claim 5, wherein the switch member is made of plastic.

7. The pump according to claim 1, wherein the valve sheet having a disk shape, which the sheet contact portion contacts, is formed integrally with the piston.

8. The pump according to claim 1, wherein the elastic member is a coiled spring.
